# EUROPEAN PATENT APPLICATION

(11) **EP 1 179 708 A1**
(43) Date of publication of application: **13.02.2002**
(21) Application number: 00124726.1
(22) Date of filing: 13.11.2000
(51) Int. Cl.: F23C 6/04, F23G 5/16, F23D 11/00, F23D 11/24

(54) **Burner for liquid fuel combustion apparatuses**

(30) Priority: 08.08.2000 KR 0045904
(71) Applicant: Park, Dong-Man, Kyungju-si, Kyungsangbuk-do (KR)
(72) Inventor: Park, Dong-Man, Kyungju-si, Kyungsangbuk-do (KR)
(74) Representative: Kügele, Bernhard

(57) **Abstract**

A structurally improved burner (2) for liquid fuel combustion apparatuses is disclosed. The burner (2) has a burner body (3) consisting of a liquid fuel injection nozzle (4), a firing rod (5), and a temperature sensor (6). This burner body (3) is installed at a position around the inlet end of a combustion tub (1) of a selected liquid fuel combustion apparatus. A preheating pipe (16) extends from the combustion air supply fan (15) to the burner body and is set within the inlet end of the combustion tub (1). A heat shielding plate (8) is interposed between the combustion tub and the rear portion of the burner in back of the burner body, thus shielding and protecting selected parts of the burner from heat of the combustion tub.

## Description

### BACKGROUND OF THE INVENTION

### Field of the Invention

The present invention relates to a burner for liquid fuel combustion apparatuses designed to burn liquid fuel, such as kerosene, so as to produce combustion heat energy and use the combustion heat energy in a hot-water supply system or a boiler system and, more particularly, to a structural improvement in such a burner to achieve a complete combustion of liquid fuel within a liquid fuel combustion apparatus, thus maximizing combustion efficiency and thermal efficiency of such combustion apparatuses, and to reduce the amount of unburnt gases and harmful exhaust gases, thus being less likely to cause environmental pollution, such as air pollution.

### Description of the Prior Art

As well known to those skilled in the art, heat energy, used in personal activities and industrial activities every day, has been typically generated by combustion of combustible materials. Petroleum, particularly, kerosene is a representative heat energy source, which is easily usable to generate heat in addition to providing a high thermal efficiency. Therefore, a variety of liquid fuel combustion apparatuses, using petroleum as a heat source, have been proposed, and widely, preferably used. The typical examples of such liquid fuel combustion apparatuses are kerosene stoves and kerosene boilers.

Conventional combustion apparatuses, which are designed to burn liquid fuel, particularly, kerosene, so as to generate thermal energy used for heating, are problematic in that they have a structural defect of being unlikely to achieve complete combustion of fuel. The conventional liquid fuel combustion apparatuses are thus undesirably reduced in their thermal efficiency, and cause incomplete combustion of fuel, thus resulting in an exhaust of harmful substances and harmful gases, such as CO, CO₂, NO, NO₂, and H₂SO₃, to the atmosphere, and causing environmental pollution, such as air pollution. Such environmental pollution negatively affects human health and the ecological system. Since known petroleum reserves are limited, and additionally, consumption of petroleum is excessive, the world's petroleum is expected to be exhausted within about 40 years or less.

In an effort to overcome the problems experienced in the conventional liquid fuel combustion apparatuses, and in regard of the expected exhaustion of petroleum in the future, the inventor of this invention proposed an improved liquid fuel combustion apparatus in Korean Patent No. 228,050. This apparatus is designed to burn liquid fuel, such as kerosene, almost completely, thus achieving desired high thermal efficiency and desired high energy efficiency. The above apparatus is also reduced in the amount of harmful, unburnt exhaust gases it emits. The object of the present invention is to provide a structurally improved burner suitable for use with the above-mentioned liquid fuel combustion apparatuses. The burner of the present invention allows the liquid fuel combustion apparatus to achieve higher combustion efficiency and higher thermal efficiency in addition to more effectively reducing the amount of harmful, unburnt exhaust gases produced.

The construction and operation of the liquid fuel combustion apparatus suitable for use with the burner of the present invention will be described herein below.

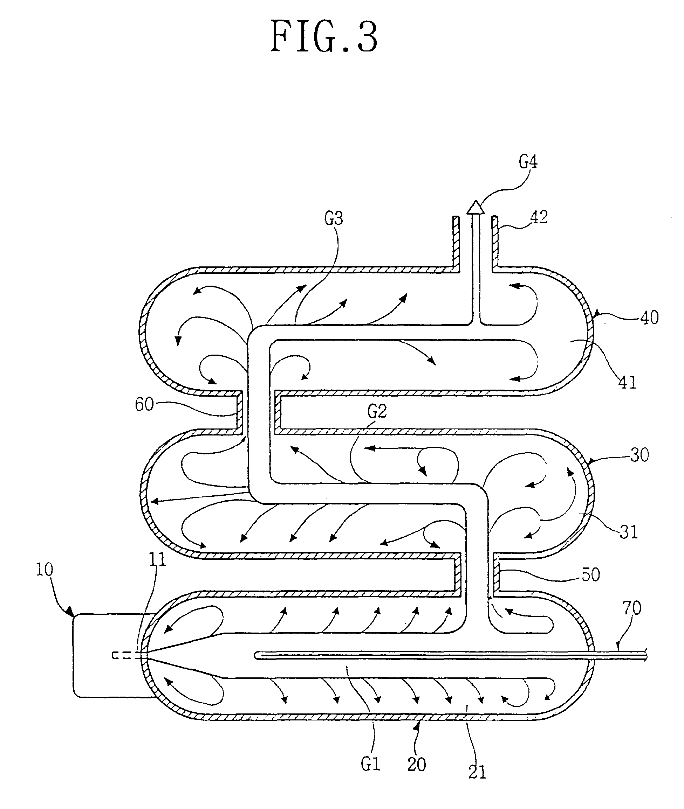

Fig. 3 is a view, schematically showing the construction and operational theory of a liquid fuel combustion apparatus, which is usable with the burner of the present invention. As shown in the drawing, the liquid fuel combustion apparatus comprises a mixed gas supply means 10, into which liquid fuel, such as kerosene, and combustion air are primarily supplied at a predetermined ratio to form mixed gas. The mixed gas supply means 10 also injects the mixed gas into a first combustion tub 20 through a mixed gas injection pipe 11 having a small diameter. The first combustion tub 20 defines a cylindrical combustion chamber 21 therein. This combustion chamber 21 has a diameter larger than that of the gas injection pipe 11, and extends in a mixed gas feeding direction. The combustion chamber 21 of the first tub 20 receives the mixed gas injected from the mixed gas supply means 10, and primarily burns the mixed gas. In such a case, the mixed gas is injected along the central axis of the combustion chamber 21. The liquid fuel combustion apparatus also has a second combustion tub 30. The interior of the second tub 30 defines a cylindrical combustion chamber 31 having a shape and size, which is the same as or similar to that of the combustion chamber 21 of the first tub 20. The inlet end of the second tub 30 is connected to the outlet end of the first tub 20 through a first small-diameter connection pipe 50 in such a way that the two combustion chambers 21 and 31 communicate with each other through the first connection pipe 50. Therefore, the primarily burnt gas G1 flows from the chamber 21 of the first tub 20 into the chamber 31 of the second tub 30 so as to be secondarily burnt within the chamber 31. In the liquid fuel combustion apparatus, a third combustion tub 40 is connected to the outlet end of the second tub 30 at its inlet end through a second small-diameter connection pipe 60. The interior of the third tub 40 defines a cylindrical combustion chamber 41 having a shape and size, which is the same as or similar to those of the combustion chambers 21 and 31 of the first and second tubs 20 and 30. The two combustion chambers 31 and 41 of the second and third tubs 30 and 40 communicate with each other through the second connection pipe 60. Therefore, the secondarily burnt gas G2 flows from the chamber 31 of the second tub 30 into the chamber 41 of the third tub 40 so as to be thirdly and finally burnt within the chamber 41 of the third tub 40. The finally burnt gas G3 is exhausted from the combustion chamber 41 of the third tub 40 to the atmosphere through an exhaust pipe 42. In the drawing, the exhaust gas from the third tub 40 is designated by the reference character G4.

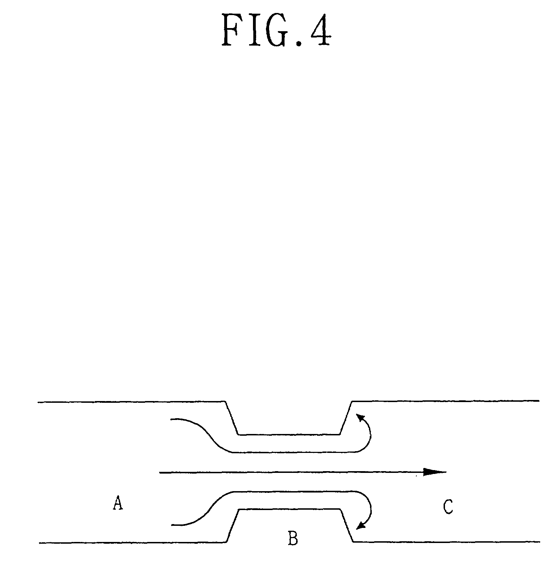

Fig. 4 is a view, showing the flowing of both the mixed gas and the burnt gas currents and the combustion theory of the apparatus of Fig. 3. When fluid flows within a pipe from the left to the right in the drawing, the fluid at the first position "A" is increased in its pressure or density, but is reduced in its flow rate. However, at the second position "B", the fluid is reduced in its pressure, but is increased in its flow rate. On the other hand, at the third position "C", the fluid is increased in its pressure, but is reduced in its flow rate, thus forming a vortex.

The liquid fuel combustion apparatus of Fig. 3 is designed using the theory of Fig. 4. That is, in an operation of the apparatus, the mixed gas formed in the mixed gas supply means 10 is injected into the combustion chamber 21 of the first combustion tub 20 along the central axis of the combustion chamber 21 through the gas injection pipe 11 having a diameter smaller than that of the chamber 21. In such a case, the mixed gas is ignited just before it comes out of the gas injection pipe 11 into the combustion chamber 21. After the ignited mixed gas is injected into the combustion chamber 21 of the first tub 20, the gas axially flows in the chamber 21 while being primarily burnt. Just after the ignited mixed gas is injected into the chamber 21, the gas G1 is reduced in its flow rate, but is increased in its pressure in accordance with the above-mentioned theory of Fig. 4. The gas G1 thus forms a vortex within the chamber 21, and flows in the chamber 21 in a direction from the left to the right in the drawing while being more effectively and actively burnt with high combustion efficiency. Such a primary combustion of the mixed gas within the chamber 21 generates heat, and so the first combustion tub 20 is heated to a high temperature. This first combustion tub 20 thus dissipates heat to the surroundings.

The primarily burnt gas G1 is, thereafter, introduced from the outlet end of the first combustion tub 20 into the inlet end of the second combustion tub 30 through the first connection pipe 50, thus being secondarily burnt in the combustion chamber 31 of the second tub 30. When the primarily burnt gas G1 flows within the first connection pipe 50 having a diameter smaller than that of the first combustion tub 20, the gas G1 has a high flow rate and a low pressure. The combustion of the gas G1 is thus temporarily stopped within the connection pipe 50. The primarily burnt gas G1 is injected into the combustion chamber 31 of the second combustion tub 30 from the first connection pipe 50, and flows into the chamber 31. Just after the gas is injected into the chamber 31 of the second tub 30, the gas is reduced in its flow rate, but is increased in its pressure in accordance with the above-mentioned theory of Fig. 4. The gas G2 within the chamber 31 thus forms a vortex, and flows in a direction from the right to the left in the drawing. In such a case, the hot gas G2 is automatically ignited again, and is secondarily burnt. Due to the vortex, the gas G2 within the chamber 31 is more effectively and actively burnt with high combustion efficiency. Such a second combustion of the gas G2 within the chamber 31 generates heat, and so the second combustion tub 30 is heated to a high temperature. This second combustion tub 30 thus dissipates heat to the surroundings.

The secondarily burnt gas G2 is, thereafter, introduced from the outlet end of the second combustion tub 30 into the inlet end of the third combustion tub 40 through the second connection pipe 60, thus being finally burnt in the combustion chamber 41 of the third tub 40. When the secondarily burnt gas G2 flows within the second connection pipe 60 having a diameter smaller than that of the second combustion tub 30, the gas G2 has a high flow rate and a low pressure. The combustion of the gas G2 is thus temporarily stopped within the connection pipe 60 in the same manner as that described for the gas G1 within the first connection pipe 50. The secondarily burnt gas G2 is injected into the combustion chamber 41 of the third combustion tub 40 from the second connection pipe 60, and flows into the chamber 41. Just after the gas is injected into the chamber 41 of the third tub 40, the gas is reduced in its flow rate, but is increased in its pressure. The gas G3 within the chamber 41 thus forms a vortex, and flows in a direction from the left to the right in the drawing. In such a case, the hot gas G3 is automatically ignited again, and is finally burnt. Due to the vortex, the gas G3 within the chamber 41 is more effectively and actively burnt with high combustion efficiency. Such a final combustion of the gas G3 within the chamber 41 generates heat, and so the third combustion tub 40 is heated to a high temperature. This third combustion tub 40 thus dissipates heat to the surroundings.

In a brief description, liquid fuel, such as kerosene, is primarily injected into the first combustion tub 20 along with combustion air by the mixed gas supply means 10. The liquid fuel is repeatedly and effectively burnt within the first to third combustion tubs 20, 30 and 40, and so the liquid fuel combustion apparatus achieves high combustion efficiency and high thermal efficiency. During the final combustion of the fuel within the third combustion tub 40 of the apparatus, the combustible components of the fuel are almost completely burnt. The third tub 40 thus discharges exhaust gas G4, which is almost completely free from harmful unburnt components, to the atmosphere through an exhaust port 12.

In the liquid fuel combustion apparatus, each of the combustion tubs 20, 30 and 40 is preferably rounded at opposite ends thereof, and so the combustion chambers 21, 31 and 41 of the tubs 20, 30 and 40 have domed ends. Due to such domed ends of the combustion chambers 21, 31 and 41, it is possible to optimize the flow of the gases G1, G2 and G3 within the chambers 21, 31 and 41, and to achieve desired high combustion efficiency.

The above-mentioned liquid fuel combustion apparatus may be preferably used in practice as follows: That is, a hot-water supply pipe 70 may be connected to one of the three combustion tubs 20, 30 and 40, for example, the first tub 20 as shown in Fig. 3. In such a case, it is possible to directly warm atmospheric air around the three combustion tubs 20, 30 and 40 in addition to heating water within the pipe 70 using heat of the first tub 20, and so the apparatus achieves a hot-water supply mode in addition to a room air heating mode. The hot-water supply mode may be operated to use the hot water for bathing and/or for an under-floor heating system.

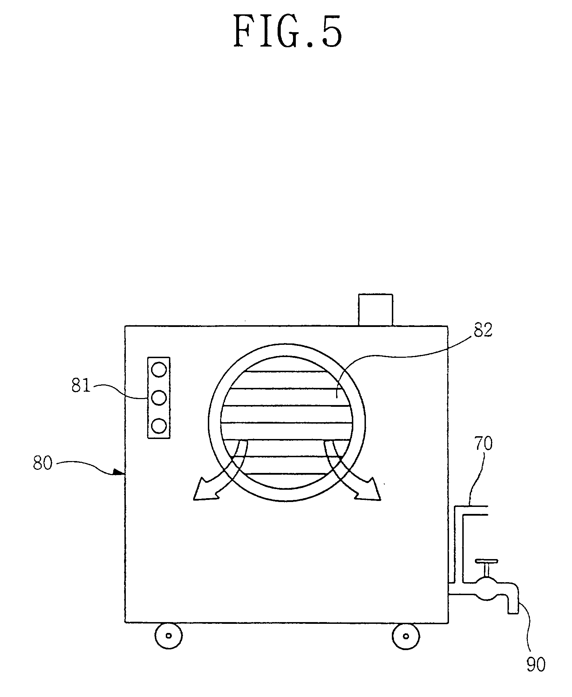

Fig. 5 is a schematic front view, showing the appearance of an embodiment of the heat system using the liquid fuel combustion apparatus of Fig. 3. In the heat system of Fig. 5, the liquid fuel combustion apparatus of Fig. 3 is set within a housing 80, with a control unit 81, a blower fan unit and a warm-air distribution opening 82 being provided at predetermined positions on the housing 80. This heat system warms air around the three combustion tubs 20, 30 and 40 of the liquid fuel combustion apparatus within the housing 80 prior to distributing the air to a room through the opening 82. In the heat system, a hot-water supply pipe 70 extends from the liquid fuel combustion apparatus within the housing 80 to the outside, thus supplying hot water from the apparatus to the pipeline of a heating system, such as an under-floor heating system. In addition, a control valve 90 is mounted to the pipe 70, and is used for controllably supplying hot water for personal requirements, such as bathing.

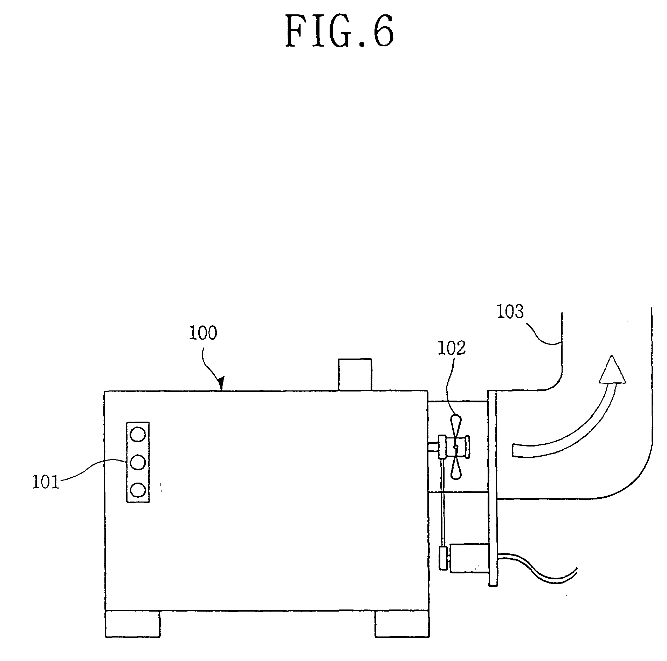

Fig. 6 is a schematic front view, showing the appearance of another embodiment of the heat system using the liquid fuel combustion apparatus of Fig. 3. In the heat system of Fig. 6, the liquid fuel combustion apparatus of Fig. 3 is set within a housing 100, with a control unit 101, a blower fan unit 102 and an air guide duct 103 being mounted at predetermined positions on the housing 100. This heat system warms air around the three combustion tubs 20, 30 and 40 of the liquid fuel combustion apparatus within the housing 100 prior to distributing the air to a target area, such as a hot-air drying area or a greenhouse, so as to maintain the interior temperature of the target area.

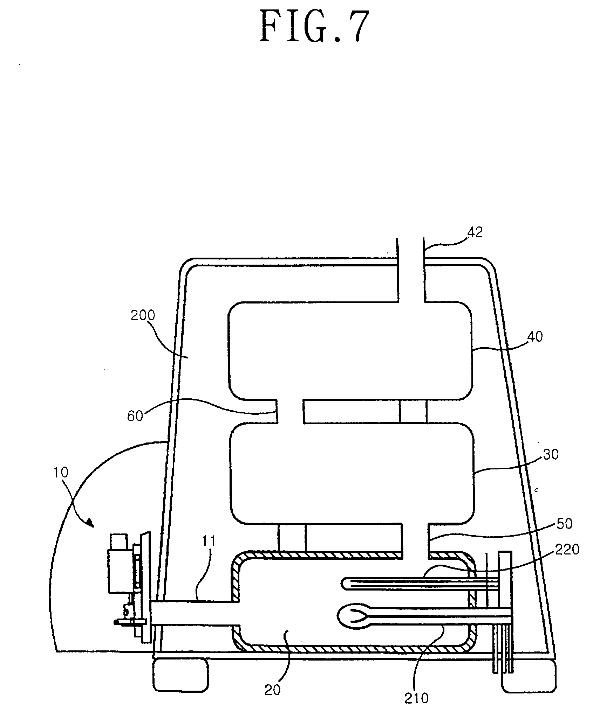

Fig. 7 is a schematic sectional view of a further embodiment of the heat system using the liquid fuel combustion apparatus of Fig. 3. This heat system is designed to function as a stove combined with a hot-water boiler.

In the heat system of Fig. 7, the mixed gas injection pipe 11 and the first to third combustion tubs 20, 30 and 40 of the liquid fuel combustion apparatus are set within a housing 200, thus achieving the combustion of liquid fuel in the same manner as that described above. A first hot-water supply pipe 210 for a heating system and a second hot-water supply pipe 220 for a hot-water supply system commonly extend from the first combustion tub 20. In addition, a mixed gas supply means 10 is connected to the inlet end of the mixed gas injection pipe 11, and forms mixed gas by mixing liquid fuel, such as kerosene, with combustion air at a predetermined ratio prior to injecting the mixed gas into the first combustion tub 20 through the mixed gas injection pipe 11.

In an operation of the heat system of Fig. 7, the mixed gas, formed in the mixed gas supply means 10, is injected into the combustion chamber 21 of the first combustion tub 20 through the gas injection pipe 11, thus being primarily burnt within the chamber 21. Such a primary combustion of the mixed gas within the chamber 21 generates heat, and so water within the first and second hot-water supply pipes 210 and 220 commonly set in the chamber 21 is heated to a high temperature. The heat system thus acts as a hot-water boiler separately supplying hot water to both the heating system and the hot-water supply system through the two supply pipes 210 and 220.

The primarily burnt gas is, thereafter, introduced from the outlet end of the first combustion tub 20 into the inlet end of the second combustion tub 30 through the first connection pipe 50, thus being secondarily burnt in the combustion chamber 31 of the second tub 30. The secondarily burnt gas flows from the outlet end of the second combustion tub 30 into the inlet end of the third combustion tub 40 through the second connection pipe 60, thus being thirdly and finally burnt in the combustion chamber 41 of the third tub 40 prior to being discharged from the tub 40 to the atmosphere through the exhaust pipe 42. In the above-mentioned operation of the heat system, the second and third combustion tubs 30 and 40 are heated to high temperatures by combustion heat, and dissipate heat to the surroundings. The heat system of Fig. 7 thus functions as a stove.

In a brief description, the heat system of Fig. 7 functions as a stove combined with a hot-water boiler, thus achieving desired high thermal efficiency and desired high energy efficiency while reducing consumption of fuel.

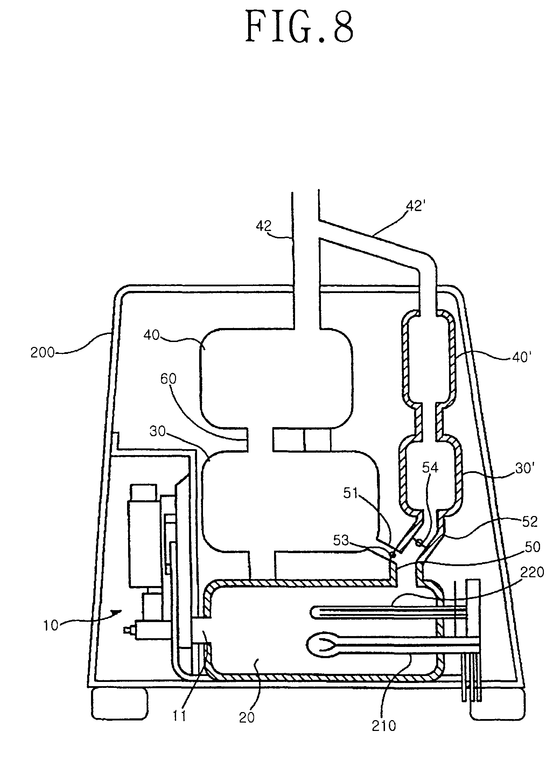

Fig. 8 is a schematic sectional view of still another embodiment of the heat system using the liquid fuel combustion apparatus of Fig. 3. This heat system is designed to structurally improve the system of Fig. 7. That is, in the heat system of Fig. 8, the mixed gas injection pipe 11 and the first to third combustion tubs 20, 30 and 40 of the liquid fuel combustion apparatus are set within a housing 200, with a first hot-water supply pipe 210 for a heating system and a second hot-water supply pipe 220 for a hot-water supply system commonly extending from the first combustion tub 20. In addition, a mixed gas supply means 10 is connected to the inlet end of the mixed gas injection pipe 11, and forms mixed gas by mixing liquid fuel, such as kerosene, with combustion air at a predetermined ratio prior to injecting the mixed gas into the first combustion tub 20 through the mixed gas injection pipe 11. The above-mentioned construction of the heat system of Fig. 8 remains the same as that described for the embodiment of Fig. 7. However, the heat system of Fig. 8 is additionally provided with an operational mode selection means for allowing a user to select the operational mode of the system between a stove/hot-water boiler mode and a hot-water boiler mode different from the heat system of Fig. 7.

In a detailed description, the heat system of Fig. 8 has two branch pipes 51 and 52, which extend from the upper end of the first connection pipe 50 provided at the outlet end of the first combustion tub 20. Of the two branch pipes 51 and 52, the first one 51 extends from the connection pipe 50 to the inlet end of the second combustion tub 30, while the second one 52 extends from the connection pipe 50 to two continuous sub-combustion tubs 30' and 40'. The two sub-combustion tubs 30' and 40' are insulated from the outside, and are used for performing combustion of mixed gas during a hot-water boiler mode of the system. When a hot-water boiler mode of the system is selected, the primarily mixed gas is guided from the first combustion tub 20 into the two sub-combustion tubs 30' and 40' in place of the second and third combustion tubs 30 and 40, and is repeatedly burnt within the tubs 30' and 40' in the same manner as that described for the second and third combustion tubs 30 and 40. In such a case, the finally burnt gas is guided from the second sub-combustion tub 40' to the exhaust pipe 42 through a guide pipe 42', thus being discharged from the tub 40' to the atmosphere through the exhaust port 42. The two branch pipes 51 and 52 are provided with control valves 53 and 54 for controlling flow of the primarily burnt gas in accordance with an operational mode selection.

When the stove/hot-water boiler mode of the heat system of Fig. 8 is selected, the combustion of mixed gas within the liquid fuel combustion apparatus is performed, with the control valve 53 of the first branch pipe 51 for the combustion tub 30 being opened and the control valve 54 of the second branch pipe 52 for the sub-combustion tub 30' being closed. In such a case, the primarily burnt gas from the first combustion tub 20 is not introduced into the sub-combustion tub 30', but is exclusively introduced into the second combustion tub 30 through both the connection pipe 50 and the first branch pipe 51 so as to be secondarily burnt. The secondarily burnt gas is, thereafter, introduced from the second combustion tub 30 into the third combustion tub 40 through the second connection pipe 60, thus being thirdly and finally burnt prior to being discharged from the tub 40 through the exhaust pipe 42. Therefore, the heat system performs a stove function in addition to a hot-water boiler function in the same manner as that described for the embodiment of Fig. 7.

When the hot-water boiler mode of the heat system of Fig. 8 is selected, the liquid fuel combustion apparatus of the system performs combustion of mixed gas, with the control valve 53 of the first branch pipe 51 for the combustion tub 30 being closed and the control valve 54 of the second branch pipe 52 for the sub-combustion tub 30' being opened. In such a case, water within the two hot-water supply pipes 210 and 220 is heated to a high temperature by heat generated from the primary combustion of mixed gas within the first combustion tub 20, thus becoming desired hot water. On the other hand, the primarily burnt gas is not introduced into the second or third combustion tub 30 or 40 performing a stove function, but is exclusively introduced into the two insulated sub-combustion tubs 30' and 40' through both the connection pipe 50 and the second branch pipe 52 so as to be secondarily and finally burnt. The finally burnt gas is, thereafter, discharged from the tub 40' through the guide pipe 42' and the exhaust pipe 42. The heat system of Fig. 8 in the hot-water boiler mode exclusively uses combustion heat for heating water within the two hot-water supply pipes 210 and 220, thus performing a hot-water boiler function.

In a brief description, the heat system of Fig. 8 is selectively operable in a stove/hot-water boiler mode in the same manner as that described for the embodiment of Fig. 7, or in a hot-water boiler mode wherein the combustion heat is concentrically used for heating water within the hot-water supply pipes 210 and 220.

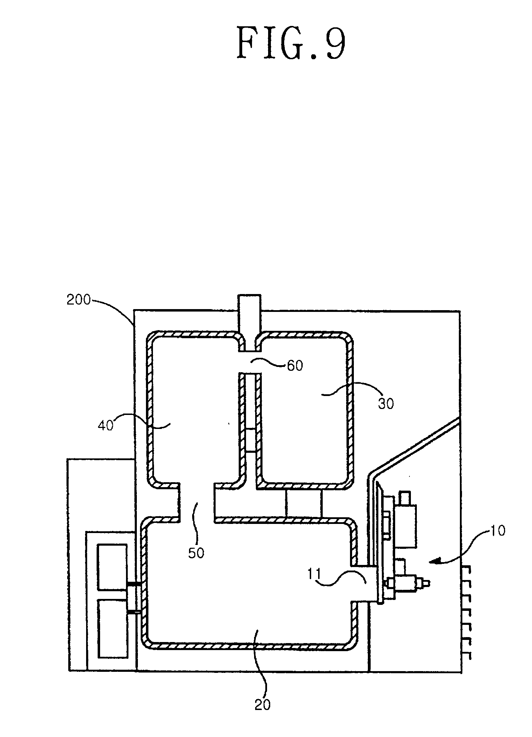

Fig. 9 is a schematic sectional view of still another embodiment of the heat system using a modification of the liquid fuel combustion apparatus of Fig. 3. In the heat system of Fig. 9, the arrangement of the first to third combustion tubs 20, 30 and 40 within the liquid fuel combustion apparatus is modified.

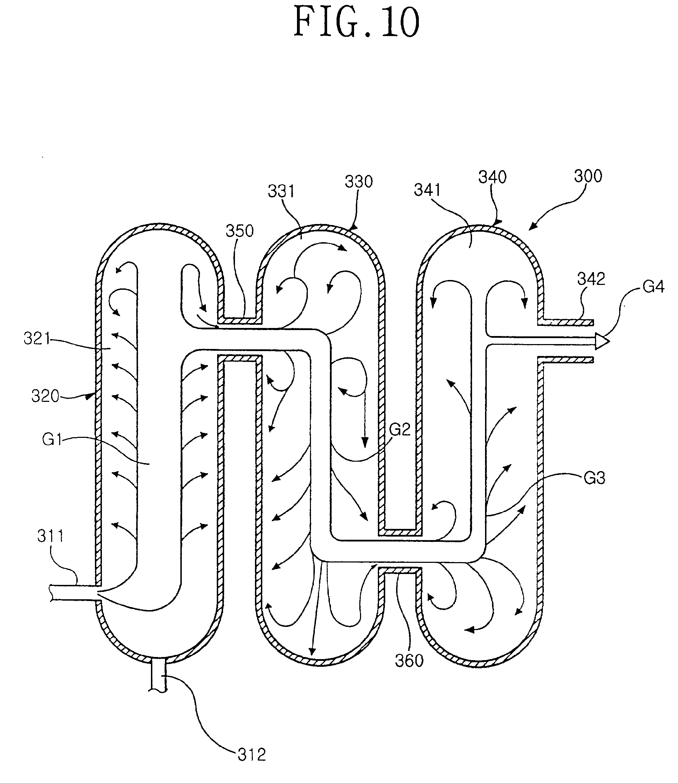

Fig. 10 is a schematic sectional view, showing the construction of a liquid fuel combustion apparatus modified to be suitable for use with a refuse incinerator 300. This liquid fuel combustion apparatus comprises a mixed gas supply means, into which liquid fuel, such as light oil or heavy oil, and combustion air are primarily supplied at a predetermined ratio while preheating them to form mixed gas. The mixed gas supply means also injects the mixed gas into a first combustion tub 320 through a mixed gas injection pipe 311 having a small diameter. A hot-air supply pipe 312 is arranged around the first combustion tub 320 and extends to the inlet end of the tub 320, and preheats air using combustion heat of the tub 320 prior to feeding hot air into the tub 320 so as to promote active combustion of mixed gas within the tub 320. The first combustion tub 320 defines a cylindrical combustion chamber 321 therein. This combustion chamber 321 receives the mixed gas from the mixed gas injection pipe 311 along with refuse, and primarily burns the mixed gas and incinerates the refuse. The liquid fuel combustion apparatus also has a second combustion tub 330. The interior of the second tub 330 defines a cylindrical combustion chamber 331 having a shape and size, which is the same as or similar to that of the combustion chamber 321 of the first tub 320. The inlet end of the second tub 330 is connected to the outlet end of the first tub 320 through a first small-diameter connection pipe 350 in such a way that the two combustion chambers 321 and 331 communicate with each other through the first connection pipe 350. Therefore, the primarily burnt gas G1 flows from the chamber 321 of the first tub 320 into the chamber 331 of the second tub 330 so as to be secondarily burnt within the chamber 331. In addition, a third combustion tub 340 is connected to the outlet end of the second tub 330 at its inlet end through a second small-diameter connection pipe 360. The interior of the third tub 340 defines a cylindrical combustion chamber 341 having a shape and size, which is the same as or similar to those of the combustion chambers 321 and 331 of the first and second tubs 320 and 330. The two combustion chambers 331 and 341 of the second and third tubs 330 and 340 communicate with each other through the second connection pipe 360. The secondarily burnt gas G2 thus flows from the chamber 331 of the second tub 330 into the chamber 341 of the third tub 340 so as to be thirdly and finally burnt within the chamber 341. The finally burnt gas G3 is exhausted from the third combustion tub 40 to the atmosphere through an exhaust pipe 342. The combustion operational theory of the apparatus of Fig. 10 is similar to that of the apparatus of Fig. 3.

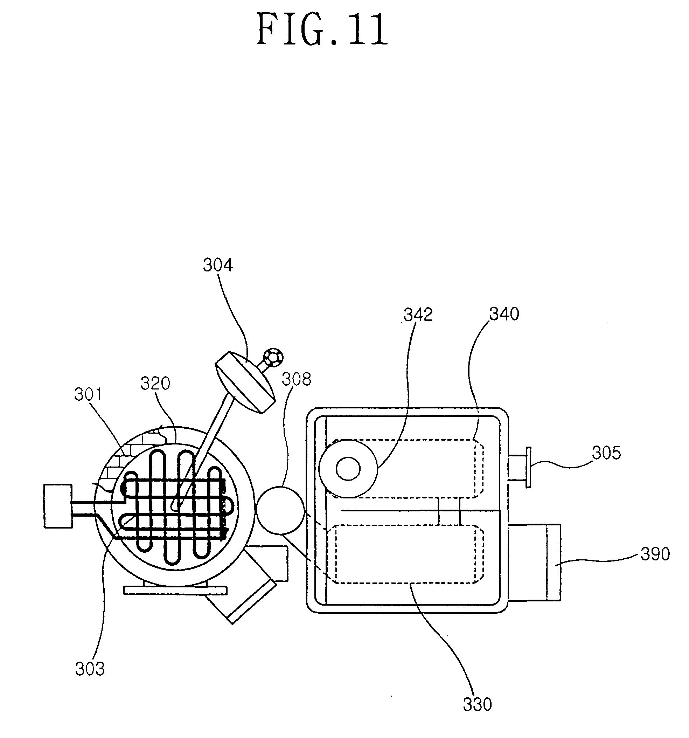

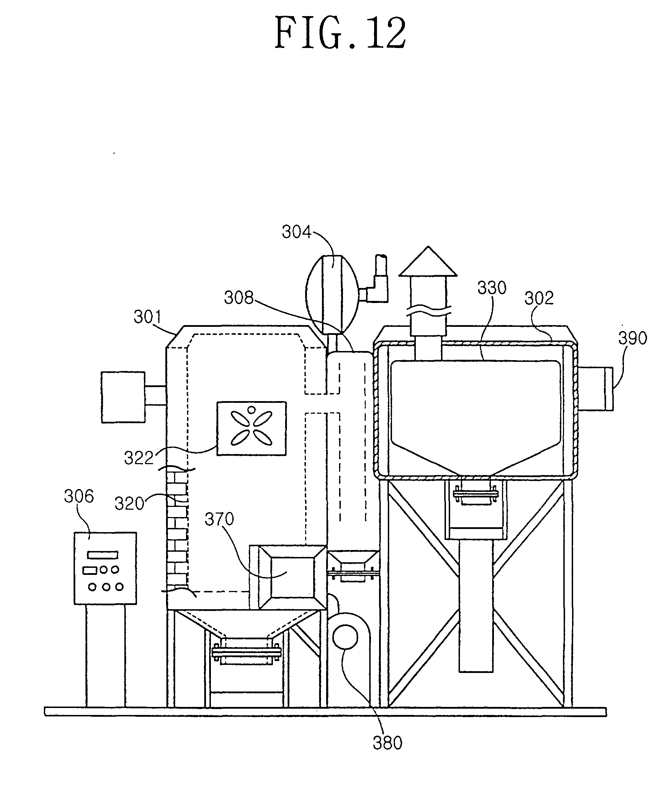

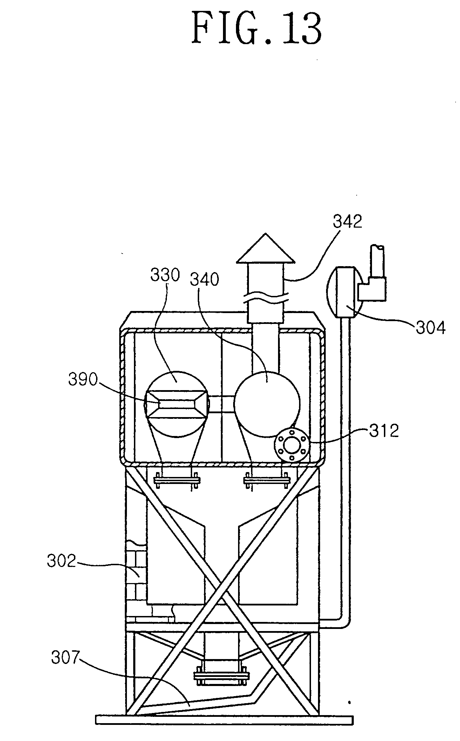

Figs. 11 to 13 are views of a refuse incinerator using the liquid fuel combustion apparatus of Fig. 10. That is, the refuse incinerator of Figs. 11 to 13 is designed to almost completely burn up refuse using the apparatus of Fig. 10 while generating little harmful unburnt gases. The refuse incinerator is also designed to generate hot air using combustion heat during the incineration of refuse, thus allowing a user to effectively use the hot air for heating or drying something. That is, the refuse incinerator of Figs. 11 to 13 is designed to achieve complete combustion of refuse in addition to generating usable hot air.

The refuse incinerator of Figs. 11 to 13 comprises first, second and third combustion tubs 320, 330 and 340, which perform primary, secondary and final combustion of mixed gas in the same manner as that described for the apparatus of Fig. 10. A burner 370 is installed at a side of the first combustion tub 320, and supplies liquid fuel, such as light oil or heavy oil, into the first combustion tub 320. The refuse incinerator also has a first blower fan unit 380, which is arranged at a position around the first combustion tub 320 so as to feed hot air under pressure into the first combustion tub 320 through the hot-air supply pipe 312, thus promoting active combustion of mixed gas within the tub 320. The refuse incinerator further includes a second blower fan unit 390, which is arranged at a predetermined position to feed hot air, formed by combustion heat of the second and third combustion tubs 330 and 340, to a target area.

In the refuse incinerator, the first to third combustion tubs 320, 330 and 340 are set within housings 301 and 302, each of which comprises thermal storing/fire resistant walls capable of storing combustion heat of the combustion tubs and reheating the combustion tubs using the stored heat so as to improve the combustion efficiency and thermal efficiency of the liquid fuel combustion apparatus. A conventional dust collector 308, such as a dust-collecting cyclone, is connected to one of the three combustion tubs 320, 330 and 340, for example, the second tub 330, so as to collect and remove dust from the combustion gas current within the tub 330.

A fire grate 303, holding refuse thereon during an incineration, is installed in the first combustion tub 320, onto which the refuse is put through a refuse drop 322. It is preferable to fabricate the fire grate 303 using cooling water circulation pipes capable of resisting the combustion heat of the first combustion tub 320 during an operation of the incinerator. In order to allow a smooth circulation of cooling water within the fire grate 303, a water circulation promoting means 304 is provided at a side of the first combustion tub 320.

The second blower fan unit 390 is mounted to one end of the second housing 302 for the second and third combustion tubs 330 and 340. This fan unit 390 sucks atmospheric air into the housing 302 to heat the air with combustion heat from the two combustion tubs 330 and 340. A hot-air guide duct 305 extends from the other end of the second housing 302 so as to feed the hot air under pressure to a target area.

In Figs. 11 to 13, the reference numeral 306 denotes a control unit for controlling the operation of the refuse incinerator, and 307 denotes an ash-treatment guide.

Of course, it should be understood that the liquid fuel combustion apparatus may be used with another type of heat system in addition to the above-mentioned heat systems.

In addition, the liquid fuel combustion apparatus of Fig. 3 has the three combustion tubs 20, 30 and 40, and performs a three-stage combustion process. However, it should be understood that the liquid fuel combustion apparatus may be designed to have a single-stage combustion structure including only one combustion tub, or a multi-stage combustion structure including two or more combustion tubs without being limited in the number of combustion tubs.

Such liquid fuel combustion apparatuses use conventionally marketed burners. However, such a conventional burner for the combustion apparatuses is designed to suck atmospheric air into the burner through an air supply duct having a large volume during a formation of mixed gas for use in the apparatuses. Therefore, the conventional burner has a structural defect of failing to atomize the carbureted fuel to a desired fine spray, such as 45 µm or less, and so the burner cannot achieve desired high combustion efficiency or desired high thermal efficiency of the combustion apparatuses. The conventional burner for the combustion apparatuses also undesirably increases the volume of the apparatuses. Another problem experienced in the conventional burners for such combustion apparatuses resides in that the parts of the burners are inevitably exposed to heat of the combustion tubs of the apparatuses, thus being repeatedly and frequently broken.

### SUMMARY OF THE INVENTION

Accordingly, the present invention has been made keeping in mind the above problems occurring in the prior art, and an object of the present invention is to provide a burner for liquid fuel combustion apparatuses, which is designed to achieve a complete combustion of liquid fuel within a liquid fuel combustion apparatus, thus maximizing combustion efficiency and thermal efficiency of such combustion apparatuses, and which reduces the amount of unburnt gases and harmful exhaust gases of the apparatuses, thus being less likely to cause environmental pollution, such as air pollution, and which is less likely to be broken, thus being effectively usable for a desirably lengthy period of time.

In order to accomplish the above object, the present invention provides a burner for liquid fuel combustion apparatuses, comprising: a burner body consisting of a liquid fuel injection nozzle, means for igniting injected liquid fuel, and means for sensing temperature of the burner body, the burner body being installed at a position around the inlet end of a combustion tub of a liquid fuel combustion apparatus; a liquid fuel pump used for supplying liquid fuel under pressure into the injection nozzle of the burner body; a combustion air supply fan used for supplying combustion air into the burner body; a preheating pipe extending from the combustion air supply fan to the burner body and installed within the inlet end of the combustion tub; and a heat shielding plate interposed between the combustion tub and a rear portion of the burner in back of the burner body, thus shielding and protecting sensitive parts of the burner from heat of the combustion tub.

### BRIEF DESCRIPTION OF THE DRAWINGS

The above and other objects, features and other advantages of the present invention will be more clearly understood from the following detailed description taken in conjunction with the accompanying drawings, in which:
Fig. 1 is a perspective view, showing the construction of a burner, used with a liquid fuel combustion apparatus, in accordance with the preferred embodiment of the present invention;
Fig. 2 is a sectional view of the burner of Fig. 1;
Fig. 3 is a view, schematically showing the construction and operational theory of a conventional liquid fuel combustion apparatus, which uses the burner of the present invention;
Fig. 4 is a view, schematically showing the flowing of both mixed gas and burnt gas currents and the combustion theory of the apparatus of Fig. 3;
Fig. 5 is a schematic front view, showing the appearance of an embodiment of the heat system using the liquid fuel combustion apparatus of Fig. 3;
Fig. 6 is a schematic front view, showing the appearance of another embodiment of the heat system using the liquid fuel combustion apparatus of Fig. 3;
Fig. 7 is a schematic sectional view of a further embodiment of the heat system using the liquid fuel combustion apparatus of Fig. 3;
Fig. 8 is a schematic sectional view of still another embodiment of the heat system using the liquid fuel combustion apparatus of Fig. 3;
Fig. 9 is a schematic sectional view of still another embodiment of the heat system using a modification of the liquid fuel combustion apparatus of Fig. 3;
Fig. 10 is a schematic sectional view, showing the construction of a liquid fuel combustion apparatus modified to be suitable for use with refuse incinerators; and
Figs. 11 to 13 are a plan view, a front view and a side view of a refuse incinerator using the liquid fuel combustion apparatus of Fig. 10.

### DETAILED DESCRIPTION OF THE INVENTION

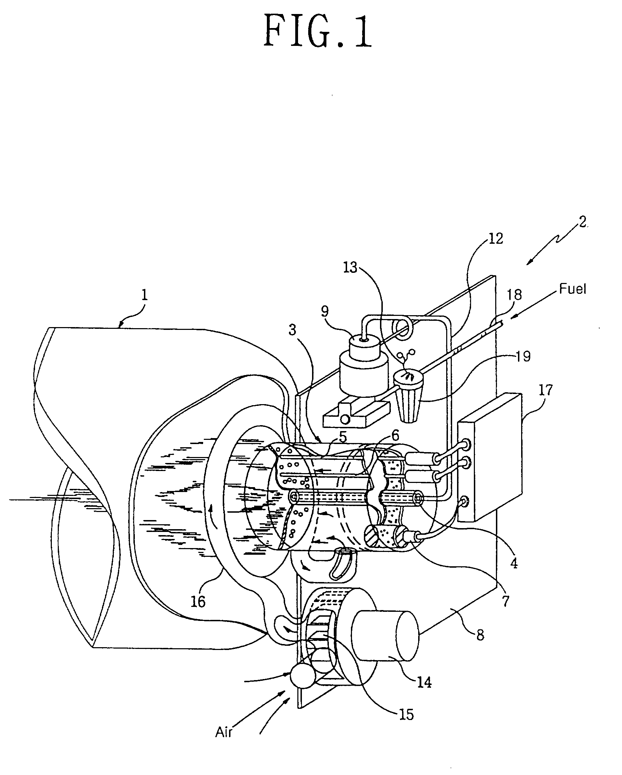

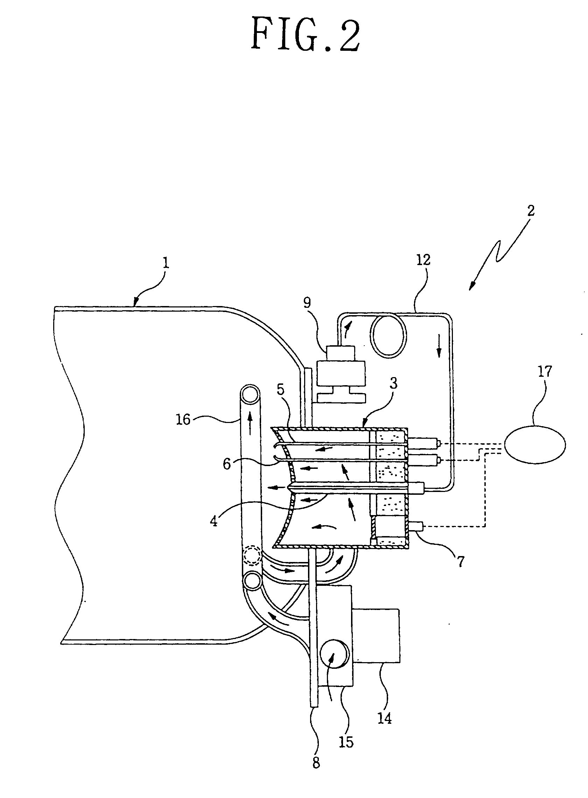

Fig. 1 is a perspective view, showing the construction of a burner, used with a liquid fuel combustion apparatus, in accordance with the preferred embodiment of the present invention. Fig. 2 is a sectional view of the burner of Fig. 1.

In Fig. 1, the reference numeral 1 denotes a combustion tub, which is equivalent to the above-mentioned combustion tub 20 of the conventional liquid fuel combustion apparatus of Fig. 3. The burner 2 of the present invention is installed at the inlet end of the combustion tub 1 as shown in Figs. 1 and 2, and acts as a means for carrying out both the function of the mixed gas supply means 10 and the function of the mixed gas injection pipe 11 included in the apparatus of Fig. 3.

In a detailed description, the burner 2 of the present invention comprises a burner body 3, which consists of an injection nozzle 4, a firing rod 5, a flame sensing rod 6, and a temperature sensing means 7. This burner body 3 is installed at the inlet end of the combustion tub 1 in such a way that the tip of the injection nozzle 4 is directed to the center of the interior of the tub 1. The burner 2 also comprises a liquid fuel supply means and a combustion air supply means. The liquid fuel supply means is used for supplying liquid fuel into the interior of the burner body 3, while the combustion air supply means is used for supplying combustion air into the interior of the burner body 3. The burner 2 further comprises a heat shielding plate 8, which shields and protects the important sensitive parts of the burner 2 from heat of the combustion tub 1.

The liquid fuel supply means consists of a fuel pump 9, which is installed at a predetermined position around the inlet end of the combustion tub 1. In an operation of the burner 2, liquid fuel, such as kerosene, is primarily supplied from a fuel tank to the injection nozzle 4. In such a case, the liquid fuel is primarily introduced to a fuel filter 19 through a fuel supply pipe 18, thus being filtered by the fuel filter 19 prior to being fed to the injection nozzle 4 through the fuel pump 9 and a fuel feed pipe 12 extending from the pump 9 to the injection nozzle 4. The injection nozzle 4 injects the liquid fuel into the combustion tub 1 along the central axis of the tub 1 while atomizing the fuel under high pressure. A heating coil 13 is provided at a proper position of the liquid fuel supply means, preferably, at a position within the filter 19 so as to selectively heat the fuel supply means. It is thus possible to thaw frozen fuel or to prevent liquid fuel from freezing as desired during winter or in a cold area.

The combustion air supply means consists of an air supply fan 15, which is installed at a predetermined position around the inlet end of the combustion tub 1 and is operated by a fan motor 14. In an operation of the burner 2, atmospheric air or combustion air is sucked into the burner body 3 by the suction force of the air supply fan 15. In such a case, the inlet air from the fan 15 primarily passes through a preheating pipe 16 arranged inside the inlet end of the combustion tub 1, thus being preheated by heat of the tub 1 prior to being introduced into the burner body 3. Since the preheated atmospheric air or the combustion air is injected into the inlet end of the combustion tub 1 from the injection nozzle 4 while being mixed with liquid fuel, the liquid fuel at the injection nozzle 4 is effectively heated by the preheated combustion air and is effectively atomized to a desired fine size, which cannot be achieved by the conventional burner for such liquid fuel combustion apparatuses. Therefore, the injected mixed gas, formed by the liquid fuel mixed with the combustion air, is active in its molecular motion and is remarkably reduced in its viscosity, thus becoming ideally combustible mixed gas.

In Figs. 1 and 2, the reference numeral 17 denotes a control unit consisting of a variety of electric elements, such as a high voltage transformer.

The operation of the burner 2 is started by an action of a start button (not shown). When the burner 2 is started to operate as described above, the air supply fan 15 is primarily operated for a predetermined time, for example, about 30 seconds, by the fan motor 14, thus expelling any remaining gas from both the combustion tub 1 and the burner body 3 so as to remove any danger of unexpected explosion or any combustion trouble due to presence of harmful gases during the operation of the burner 2. Thereafter, the fuel pump 9 is turned on so as to feed selected liquid fuel, such as kerosene, under pressure to the injection nozzle 4 of the burner body 3. In such a case, the interior pressure of the injection nozzle 4 is increased to about 7 Kg/cm² ∼ 10 Kg/cm², and so the nozzle 4 effectively injects the liquid fuel from its tip into the combustion tub 1 while atomizing the fuel into fine droplets. In addition, atmospheric air or combustion air is sucked into the burner body 3 by the suction force of the air supply fan 15. In such a case, the inlet air primarily passes through the preheating pipe 16 arranged inside the inlet end of the combustion tub 1, thus being preheated by heat of the tub 1 prior to being introduced into the burner body 3. Therefore, when the liquid fuel is injected into the combustion tub 1 from the injection nozzle 4 along with the preheated combustion air, the liquid fuel is effectively heated by the preheated combustion air, and is effectively atomized to a desired fine size. The injected mixed gas, formed by the liquid fuel mixed with the combustion air, thus becomes ideally combustible mixed gas. The injected mixed gas is also ignited by a high voltage spark of the firing rod 5, and so flame from the ignited mixed gas flows to the outlet end within the combustion tub 1 along the central axis of the tub 1. In such a case, since the inner diameter of the combustion tub 1 is gradually enlarged in a direction from the inlet end of the tub 1 around the tip of the injection nozzle 4 to the outlet end, the flame of the injected mixed gas is reduced in its flow velocity, but is increased in its pressure at a position just after the tip of the injection nozzle 4, thus forming a vortex. Therefore, it is possible for the burner 2 to achieve optimum combustion or almost complete combustion of the injected mixed gas within the combustion tub 1. This finally allows the liquid fuel combustion apparatus to achieve a desired high thermal efficiency and to almost completely prevent an exhaust of harmful unburnt gases into the atmosphere. In the present invention, the rear area of the burner 2, including the control unit, is isolated from the combustion tub 1 by the heat shielding plate 8, and so a variety of electric and electronic elements of the control unit of the burner 2 are effectively protected from heat of the combustion tub 1 during an operation of the liquid fuel combustion apparatus. The control unit is thus unlikely to be damaged or broken. In addition, the preheating pipe 16, installed within the inlet end of the combustion tub 1 so as to effectively preheat the inlet combustion air as described above, is not protruded from the tub 1, and so it is possible to accomplish the recent trend toward compactness of the liquid fuel combustion apparatus.

In accordance with repeated studies and experiments performed by the inventor of this invention, it was noted that the quantity of dissipated heat of the combustion tub 1, used with the burner 2 of this invention, during a combustion air preheating process of the preheating pipe 16 was in proportion to the value of [(air and fuel preheating temperature + fuel combustion temperature)ⁿ x heat dissipating area]. Such quantity of dissipated heat of the tub 1 is remarkably larger than that of a liquid fuel combustion apparatus using a conventional burner, which is in proportion to the value of [(fuel combustion temperature)ⁿ x heat dissipating area]. This means that the liquid fuel combustion apparatus using the burner 2 of the present invention effectively produces a desirably larger quantity of dissipated heat from the combustion tub 1 while conserving fuel.

As described above, the present invention provides a structurally improved burner for liquid fuel combustion apparatuses. The burner of the present invention is designed to allow a liquid fuel combustion apparatus to remarkably improve its combustion efficiency and to finally achieve desired high thermal efficiency in addition to desired conservation of energy. The liquid fuel combustion apparatus, using the burner of this invention, is also improved in its durability, and minimizes the amount of harmful, unburnt exhaust gases, thus being unlikely to cause environmental pollution, such as air pollution.

Although a preferred embodiment of the present invention has been described for illustrative purposes, those skilled in the art will appreciate that various modifications, additions and substitutions are possible, without departing from the scope and spirit of the invention as disclosed in the accompanying claims.

## Claims

1. A burner for liquid fuel combustion apparatuses, comprising:
a burner body consisting of a liquid fuel injection nozzle, means for igniting injected liquid fuel, and means for sensing temperature of the burner body, said burner body being installed at a position around an inlet end of a combustion tub of a liquid fuel combustion apparatus;
a liquid fuel pump used for supplying liquid fuel under pressure into said injection nozzle of the burner body;
a combustion air supply fan used for supplying combustion air into said burner body;
a preheating pipe extending from said combustion air supply fan to said burner body and installed within said inlet end of the combustion tub; and
a heat shielding plate interposed between said combustion tub and a rear portion of said burner in back of said burner body, thus shielding and protecting sensitive parts of said burner from heat of the combustion tub.

2. The burner according to claim 1, wherein said liquid fuel combustion apparatus used with the burner comprises:
a first combustion tub defining a cylindrical combustion chamber having a diameter larger than that of said injection nozzle, said combustion chamber of the first tub extending in a mixed gas injecting direction, and receiving the mixed gas axially injected from the injection nozzle along a central axis of the chamber so as to primarily burn the mixed gas;
a second combustion tub defining a cylindrical combustion chamber having a shape and size, which is the same as or similar to that of the combustion chamber of said first tub, said combustion chamber of the second tub being connected to an outlet end of the combustion chamber of the first tub at its inlet end through a first small-diameter connection pipe, thus receiving primarily burnt gas from the combustion chamber of the first tub so as to secondarily burn the gas; and
a third combustion tub defining a cylindrical combustion chamber having a shape and size, which is the same as or similar to those of the combustion chambers of the first and second tubs, said combustion chamber of the third tub being connected to an outlet end of said combustion chamber of the second tub at its inlet end through a second small-diameter connection pipe, thus receiving secondarily burnt gas from the combustion chamber of the second tub so as to thirdly and finally burn the gas prior to exhausting finally burnt gas to the atmosphere.

3. The burner according to claim 2, wherein each of the combustion chambers of the first to third tubs is rounded at opposite ends thereof, thus having domed ends.

4. The burner according to claim 2, wherein at least one hot-water supply pipe is connected to one or more of the first to third combustion tubs.

5. The burner according to claim 2, wherein the liquid fuel combustion apparatus is set within a housing provided with a control unit, a blower fan unit and a warm-air distribution opening.

6. The burner according to claim 2, wherein the liquid fuel combustion apparatus used with the burner is a refuse incinerator comprising:
a first combustion tub receiving mixed gas, formed of liquid fuel mixed with combustion air, along with refuse so as to primarily burn the mixed gas and the refuse;
a second combustion tub connected to said first combustion tub through a first small-diameter connection pipe, thus receiving primarily burnt gas from the first combustion tub through the first small-diameter connection pipe so as to secondarily burn the gas;
a third combustion tub connected to said second combustion tub through a second small-diameter connection pipe, thus receiving secondarily burnt gas from the second combustion tub through the second small-diameter connection pipe so as to thirdly and finally burn the gas prior to exhausting finally burnt gas to the atmosphere through an exhaust pipe;
a hot-air supply pipe and a first blower fan unit installed at an end of said first combustion tub so as to feed hot air into the first combustion tub; and
a second blower fan unit and a hot-air guide duct installed at a side of both the second and third combustion tubs so as to form hot air using combustion heat dissipated from the second and third tubs and to feed the hot air to a target area.
